# EUROPEAN PATENT SPECIFICATION

(11) **EP 2 315 313 B1**
(45) Date of publication and mention of the grant of the patent: **08.02.2012**
(21) Application number: 10354051.4
(22) Date of filing: 20.09.2010
(51) Int. Cl.: H01R 4/36

(54) **Assembly for multiple connection in an electrical apparatus**
Anordnung zur Mehrfachverbindung bei einer elektrischen Vorrichtung
Ensemble pour la connexion multiple dans un appareil électrique

(30) Priority: 26.10.2009 IN CH25882009; 30.10.2009 IN CH26422009
(43) Date of publication of application: 27.04.2011
(73) Proprietor: Schneider Electric Industries SAS, 92500 Rueil-Malmaison (FR)
(72) Inventor: Satyanarayanan, Karthnik, 38050 Grenoble Cedex 09 (FR); Patra, Prasanta Kumar, 38050 Grenoble Cedex 09 (FR); Kulkarni, Jitendra, 38050 Grenoble Cedex 09 (FR)
(74) Representative: Péru, Laurence

(56) References cited:
- EP-A1- 1 796 214
- EP-A1- 1 916 740
- FR-A1- 2 358 575

## Description

### BACKGROUND OF THE INVENTION

The present invention relates to the fields of connection of an electrical conductor to an electrical apparatus such as a circuit breaker. The present invention specifically relates to an assembly for multiple connection in the electrical apparatus.

### STATE OF THE ART

Many electrical applications require multiple connection terminal architecture to provide lodging and clamping of multiple electrical conductors such as cables, busbars, electrical wirings and the like. In particular, it is applicable for use in connection of multiple electrical conductors to the terminal assembly in the electrical apparatus such as circuit breaker. Most of the existing systems for clamping the electrical conductors are available as single tunnel terminal and bi-connect terminal.

In the single tunnel terminal architecture, the screw is always placed above the fixed connector, and during its tightening the clamp moves upwards to tightens the connections: the screw remains in the same position for various connection combinations. FR 2612340 describes a multiple connection terminal for a modular electrical apparatus with insulating housing wherein a metallic cage provided with a clamping screw is intended to receive the cables and the busbars which are inserted on either side of a fixed contact pad. EP 0059939 also describes a terminal in the shape of a frame adapted to receive several different conductors, particularly cable and busbars. A U-shaped additional metallic clamp and a screw cooperate with a nut placed between two lateral faces of the frame. These conventional approaches exhibit a drawback of connection loosening phenomenon, which reduces the quality of the electrical contact between the multiple electrical conductors and the clamp. Moreover, this fixed way of connection is not flexible since the busbar is always placed first, with the cable then placed below it in the same housing (reversing this combination is problematic because the cable size varies based on the application of the load, and doing so would deflect the bus bar during tightening).

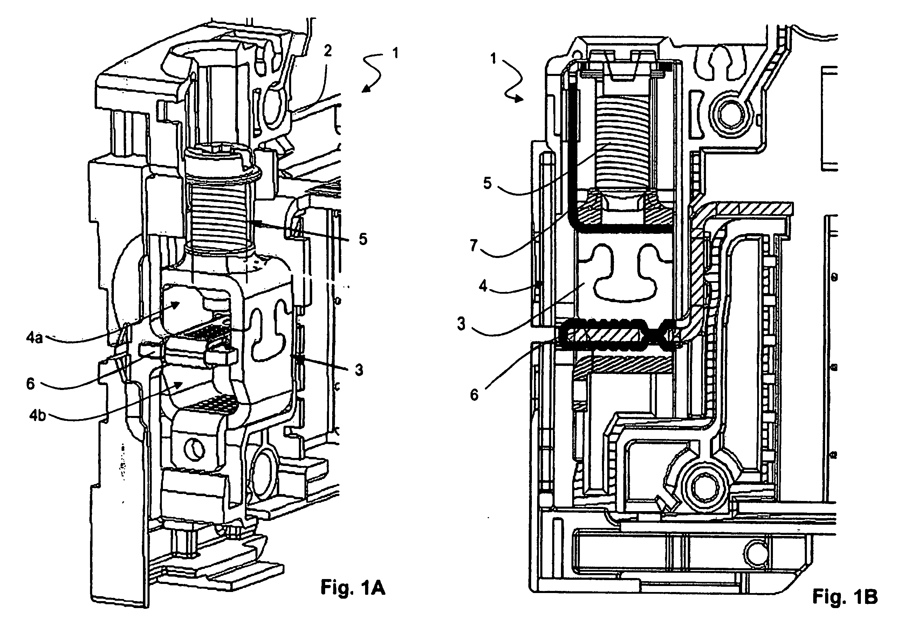

A double tunnel terminal 1 placed in the housing 2 of a circuit breaker is illustrated in Figure 1A. The conductors are placed into a cage, or clamp, 3 of the terminal assembly 1 provided with a passage 4 therefor. A screw 5 is inserted within the clamp 3 to fasten the conductors 6. The screw 5 moves downwards for the free space available in the upper lodging based on the connection made in the upper lodging 4a and then moves upwards for the remaining available free space based on the connection made in the lower lodging 4b to ensure the tightening of the connection and during unscrewing the clamp 3 comes back to its position. Thus, in the double tunnel architecture, the position of the screw 5 is different for different connection combination made in the upper and lower lodging 4 of the cage 3. However since the screw 5 does not have any support, it is possible for the screw 5 to fall out from the cage 3 at fully disengage condition. Therefore, as shown in Figure 1B, the circuit breaker is often provided with a conventional connecter clip 7, which holds the screw 5 to the clamp 2.

EP-1 916 740 A1, which is considered as the closest prior art, discloses such a terminal assembly comprising:
- a clamp defining a passage for receiving and securing multiple electrical conductors and formed with a hole;
- a fastening means cooperating with the clamp, comprising a tip at an extremity of a cylindrical part able to penetrate the hole of the clamp;
- a protection plate comprising a base part adapted for introduction into the passage of the clamp, a portion extending from the base part and sensibly orthogonal thereto.

These conventional assemblies are space consuming due to the design, which results in minimizing insertion space for the electrical conductors. Therefore, such terminal assemblies are not reliable to adapt multiple combinations of the conductors and are dedicated to a specific combination (e.g. one cable + one busbar) in accordance with the user requirements. Moreover, most of the conventional architectures are designed for the electrical conductors with a specific size. In particular, since the height of the conventional connecter clip 7 is constant, it should be designed to appropriate size: too short, it would not allow the fully disengagement of the screw 5 from the clamp 3 during unscrewing, and too long, it would let the screw head to disengage from the conventional connecter clip 7 at fully tightened condition, which lead to improper further engagement of the clip 7 with the screw head. Furthermore, the double tunnel architecture is designed for utilizing the maximum space of the upper lodging capacity 4a, but this space remains partially occupied by the screw 5. Main drawback is thus that it is not flexible to adapt different capacity and dimensions of the electrical conductors and also fails to provide a uniform gripping between the multiple electrical conductors and the fixed connector, which leads to higher voltage drops.

In order to optimize the user requirements, it is necessary to provide various connection terminal architectures to adapt to such multiple combinations of the conductors. This affects the modularity of the electrical apparatus, and requires complex and expensive arrangements, which results in delicate to manufacture, costly and bulky. Moreover, the mounting of the headed screw 5 on the clip 6 necessitates a clearance inside the assembly which leads to some tilting possibilities, and thus the right tightening of multiple connection with different sizes of cables may lead to the damage of the conventional connecter clip 6. Further, some of conventional approaches fail to provide ingress safety protection. Therefore, it is desirable to provide an assembly for multiple connection terminals in an electrical apparatus, which is capable of overcoming all the above-mentioned drawbacks and limitations.

### SUMMARY OF THE INVENTION

An object of the present invention is to provide an assembly for multiple connection terminals in an electrical apparatus, which is capable of providing highest reliability and flexibility to achieve uniform and larger space for insertion of multiple electrical conductors.

Another object of the present invention is to provide an assembly for multiple connection terminals in an electrical apparatus, which is capable of providing a uniform gripping irrespective of size of the electrical conductors.

A further object of the present invention is to provide an assembly for multiple connection terminals in an electrical apparatus, which enhances electrical contact between the electrical conductors.

A further object of the present invention is to provide an assembly for multiple connection terminals in an electrical apparatus, which facilitates effective tightening of different cross-section electrical conductors without using any additional accessories.

A further object of the present invention is to provide an assembly for multiple connection terminals in an electrical apparatus, which is simple, cost effective and integrated as single part.

The invention relates to a terminal assembly and an electrical apparatus which achieve these objectives and which are defined in the appended claims.

According to a preferred embodiment, the present invention relates to an assembly for multiple connection terminals in an electrical apparatus comprising a protection plate arranged with a resilient portion at its both ends and an opening on its surface. A metallic part is configured with a gripping profile on its surface, where the metallic part is insert-molded or pressfitted with the protection plate. A clamp is formed with a through hole and a housing for receiving and securing multiple electrical conductors. A fastening means is secured against the through hole in the clamp and has a cylindrical or non-threaded tip to contact the metallic part through the opening in the protection plate. A fixed connector is placed inside the housing of the clamp in such a way that the housing of the clamp is divided into an upper and lower housing portions to provide separate lodging for clamping the electrical conductors. The protection plate with the metallic part is introduced into the housing of the clamp in such a way that the resilient portion of the protection plate faces away from the clamp. The fastening means is fastened on the clamp to press down the protection plate with the metallic part in relation to movement of the fastening means. The housing space of the clamp can be adjusted in accordance with dimensional variations of the electrical conductors being placed in both the upper and lower housing or in any one of the housing. The provision of the opening in the surface of the protection plate increases the thread engagement, when the full capacity of the clamp is utilized by the conductors. Also, the opening helps to transfer the entire tightening load directly to the metallic part being pressfitted or insert-molded with the protection plate. Such assembly provides highest reliability and flexibility to achieve uniform and larger space for insertion of multiple electrical conductors.

Furthermore, the resilient portion of the protection plate is fixed to a casing of the electrical apparatus, such that the resilient portion of the protection plate holds the clamp even if the fastening means is completely disengaged from the clamp. When the fastening means is disengaged from the clamp, the protection plate returns back to its original position due to the presence of resilient portion. The resilient portion of the protection plate is positioned inline with the outer surface of the electrical apparatus to provide ingress protection during the movement of the fastening means. The protection plate is made of an electrically non-conductive material, where the protection plate is a U-shaped protection plate. The clamp is also attached with a shutter for ingress protection at lower housing.

Moreover, when ever two conductors of different cross section are placed and tightened inside the upper housing of the clamp, due to the flexibility provided by the resilient portion, the protection plate along with the metallic part gets tilted based on placement of the conductors to apply enough load to tight both the conductors properly. The metallic part has a gripping profile, which provides a uniform gripping while tightening the electrical conductors, where the electrical conductors comprise a cable and a bus bar. The fastening means is fastened onto the clamp after inserting the electrical conductors into the upper and lower housing portions of the clamp or in any one of the housing based on the requirements. The fastening means can move down the protection plate until it properly touches the fixed connector during no connection means in the upper housing, and during the connection means in the upper housing the fastening means move down the protection plate until it touches the conductors followed by tightening of it. The fastening means comprises a headed screw and a non-headed screw.

In another preferred embodiment, the invention concerns an assembly for multiple connection terminals in an electrical apparatus, comprising a clamp formed with a through hole and a housing for receiving and securing multiple electrical conductors, a fastening means secured against the through hole in said clamp for fastening of electrical conductors, and a connecting clip having a upper surface and a lower surface, the upper surface being fixed with the fastening means and the lower surface being placed into the clamp wherein the upper and lower surface of the connecting clip is connected by means of a resilient means to enable the compression of the connecting clip in accordance to the position of the fastening means.

According to another aspect, the present invention relates to an electrical apparatus comprising a casing equipped with an assembly for multiple connection terminals described in the above embodiments.

### BRIEF DESCRIPTION OF THE DRAWINGS

Other advantages and features will become more clearly apparent from the following description of particular embodiments of the invention, given for illustrative and non-restrictive example purposes only and represented in the accompanying drawings.
Figures 1A and 1B show a conventional double tunnel terminal for circuit breaker, both with and without a conventional connecter clip and cover.
Figure 2 shows an isometric view of a protection plate arranged with a metallic part, in accordance with an exemplary embodiment of the present invention;
Figures 3A, 3B and 3C illustrate the assembly for multiple connection terminals engaged with a casing in a fully opened and a fully closed conditions, in accordance with an exemplary embodiment of the present invention;
Figure 4 shows a connecting clip according to an embodiment of the present invention.
Figures 5A, 5B and 5C show the assembly with the connecting clip according to the invention in screw engaged position and disengaged position.

### DETAILED DESCRIPTION OF A PREFERRED EMBODIMENT

For the sake of simplification of description of the embodiments according to the invention, terminal assembly will be described in relation with this position of insertion shown in the figures, wherein the passage for connecting a conductor to the apparatus is lateral for horizontal insertion, and the fastening of the conductor inside the apparatus is performed by rotating a screw from an upper surface of the apparatus. It is however understood that the position terms such as "horizontal", "top", "bottom" are in no way restrictive as to the object of the invention. Moreover, geometric terms such as "orthogonal" etc. are to be understood in their mechanical acceptation, i.e. tolerating a deviation with respect to the strict mathematical definition. Some wordings may be replaced by equivalent and have to be considered regarding the function they define in the technical features they represent.

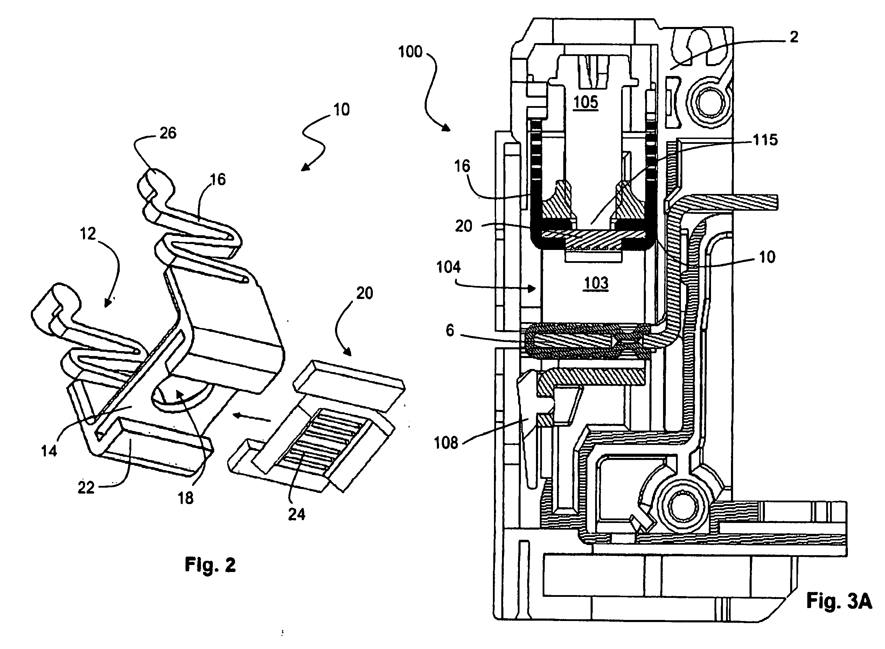

Figure 2 shows an isometric view of a protection plate 10 in accordance with an exemplary embodiment of the present invention. The protection plate 10 is an ingress protection (IP) part, which is made of electrically non-conductive material, preferably plastic. The plastic portion 12 of the protection plate 10 acts as an IP feature (finger safe, IP20) and comprises a support part 14 dedicated to cooperate with the screw 5 of the assembly and lateral part 16 which is located up the cooperating part 14 when the terminal 100 is arranged with the screw 105 fastened from the top of the housing 2 of the apparatus. The upper region 16 of the protection plate 10 is molded to form a resilient portion. Preferably the protection plate 10 is configured as U-shaped structure to provide flexibility on higher capacity for electrical conductors, and both sides 16 are spring-like, preferably with a Z shape or as a zigzagging element to allow compression perpendicular to the cooperating part 14. Furthermore, the cooperating part 14 of protection plate 10 is arranged with an opening 18 for insertion of fastening means 105.

The protection plate 10 moreover comprises a base part 20 which is adapted to transfer the force of the fastening means to the conductors so as to avoid a direct contact of said conductors with a screw 105. The base part 14 is preferably metallic and the plastic portion 12 is formed in such a way that the metallic part 20 can be secured and inserted into the cooperating part 14, e.g. through grooves 22 which are molded. The metallic part 20 can also be press-fitted to the protection plate 10. The metallic part 20 is provided with a gripping profile 24 at its bottom surface, which provides a uniform gripping and gives a necessary strength to properly hold the electrical conductors while tightening.

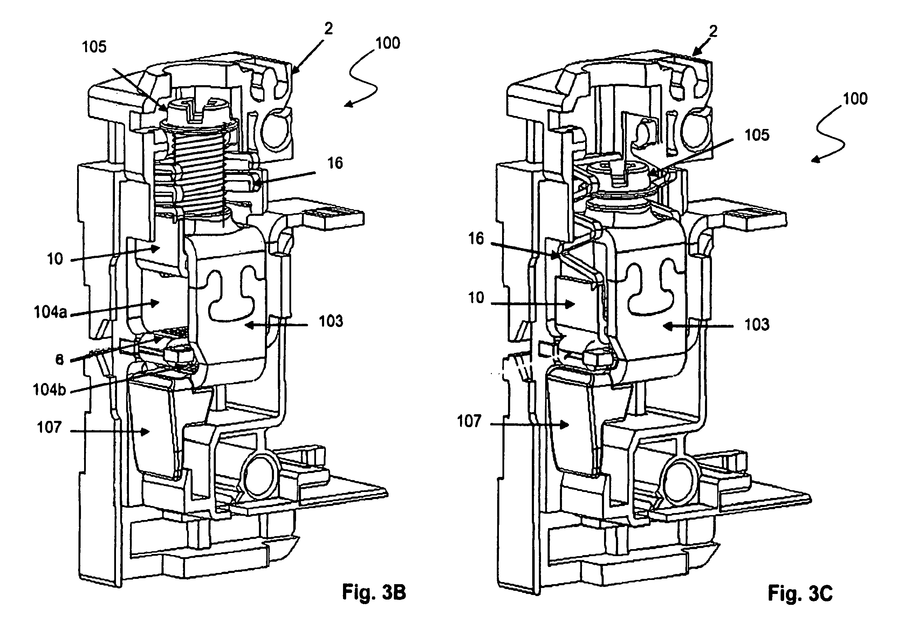

The assembly terminal 100 for multiple connection provided with above protection plate 10 can be applied in the dedicated location of the casing 2 of electrical apparatuses, e.g. low voltage circuit breakers, as shown in Figures 3. The assembly 100 comprises the protection plate 10 with the metallic part 20, a clamp 103, a fastening means 105 and a shutter 108. The protection plate 10 with the metallic part 20 can be introduced into the clamp 103 to enclose the inner surface of the clamp 103, where the resilient portion 16 of the protection plate 10 faces away from the clamp 103. The clamp 103 is formed with a conductor passage 104 for receiving and securing the electrical conductors. The top part of the clamp 103 can be shaped with a threaded hole, where the fastening means 105 can fully be threaded whereas the bottom part can be connected with the shutter 108 which acts as an IP feature.

Although represented here as a headed screw 105, the fastening means 105 can be non-headed as per the maximum space requirement in the electrical apparatus. The fastening means 105 exhibits a cylindrical part, threaded over its length or not, that is chamfered at its tip 115 to provide unlimited torque at full disengagement condition. Further, the tip portion 115 of the fastening means 105 is made in contact with the metallic part 20 through the opening 18 in the base part 16 of protection plate 10, which enables movement of the protection plate 10 within the conductor passage 104 in relation to movement of the fastening means 105. The opening 18 in the protection plate 10 facilitates maximum thread engagement of the fastening means 105 in threaded condition, when the full capacity of the clamp 103 is used by the electrical conductors and helps to transfer the entire tightening load directly to the metallic part 20.

The entire assembly terminal 100 for the multiple connection is positioned in the casing 2 of the electrical apparatus. The fixed conductor 6 is situated in the conductor passage 104 so as to divide it into an upper housing portion 104a and a lower housing portion 104b, which provides a multiple tunnel feature. The upper housing portion 104a and the lower housing portion 104b allow the electrical conductors such as cable or busbar, in contact with the fixed connector 6 assembled in the casing 2 of the electrical apparatus. The similar assembly can be maintained on both sides of the electrical apparatus, particularly at top and bottom of the electrical apparatus.

In addition, the upper and lower housing portions 104a, 104b are designed to provide separate lodging for clamping multiple electrical conductors, and the space can flexibly be adjusted in both the upper and lower housing portions 104a, 104b to optimize the customer requirements. The resilient portion 16 of the protection plate 10 is positioned inline with the outer surface of the electrical apparatus in order to provide ingress protection (IP40) against solid particle, for the upper housing portion 104a during the movement of fastening means 105.

Moreover, one end 26 of the resilient portion 16 is fixed to the casing 2, which acts as a reference point for the movement of resilient portion 16 in relation to the fastening means 105. Since the end 26 of the resilient portion 16 is fixed to the casing 2, the protection plate 10 holds the clamp 103 in fully opened condition, i.e. the fastening means 105 is fully disengaged from the clamp 103, as shown in Figure 3B. In such condition, the resilient portion 16 is in normal position to hold the clamp 103, which provides maximum space availability for insertion of multiple electrical conductors both in the upper and lower housing portions 104a, 104b. The maximum space availability of the assembly 100 can further be varied based on the customer requirement.

Referring to Figure 3C, the fully closed condition is illustrated. Initially, the fastening means 105 is threaded into the clamp 103, which first moves up the clamp 103, such that the conductor, i.e. busbar, in the lower housing portion 104b is securely engaged with the fixed connecter 6. Then, the tip portion 115 of the fastening means 105 contacts the base part 20 through the opening 18 in the cooperating part 14. While tightening the fastening means 105, the cylindrical tip portion 115 presses the protection plate 10 located within the clamp 103, such that the protection plate 10 moves down with respect to the movement of the fastening means 105.

In fully closed condition when there are no conductors in the upper housing 104a, the fastening means 105 moves the protection plate 10 until it reaches the fixed connector 6. In such condition, the resilient portion 16 is in expanded position to completely occupy the conductor passage 104, which provides highest reliability and flexibility to enhance electrical contact between the electrical conductors. The expansion of the resilient portion 16 is designed in accordance with the conductor passage 104 in the clamp 103. Such resilient feature in the protection plate 10 provides flexibility to the space available in the terminal assembly 100 with different sizes of conductor diameter. The protection plate 10 elongates or reduces as per the size of conductor. The resilient feature in the protection plate 10 also facilitates effective tightening of different cross-section electrical conductors in the upper housing 104a due to balancing of the resilient portion 16 in the protection plate 10.

When the fastening means is unscrewed or loosened from the clamp 103, the protection plate 10 returns back to its original position, which illustrates a cross sectional view depicting thread engagement of the fastening means 105 of the assembly 10 with the clamp 103, in accordance with an exemplary embodiment of the present invention. In such condition, the fastening means 105 is still engaged with the clamp 103, which ensures maximum space at the upper housing portion 104a without utilizing any additional space at the lower housing portion 104b. The assembly further allows the user to fully disengage the fastening means 105 from the clamp 103, such that the fastening means 105 is freely suspended to move down the clamp 103, which makes gap in the lower housing portion 104b for electrical conductor insertion. Even though the fastening means 105 is freely suspended, it never comes out of the casing 2 and is also pointed in the passage 104 of the clamp 103 due to its extended tip portion 115. Such assembly 100 for the multiple connection terminals is simple, cost effective and integrated as single part.

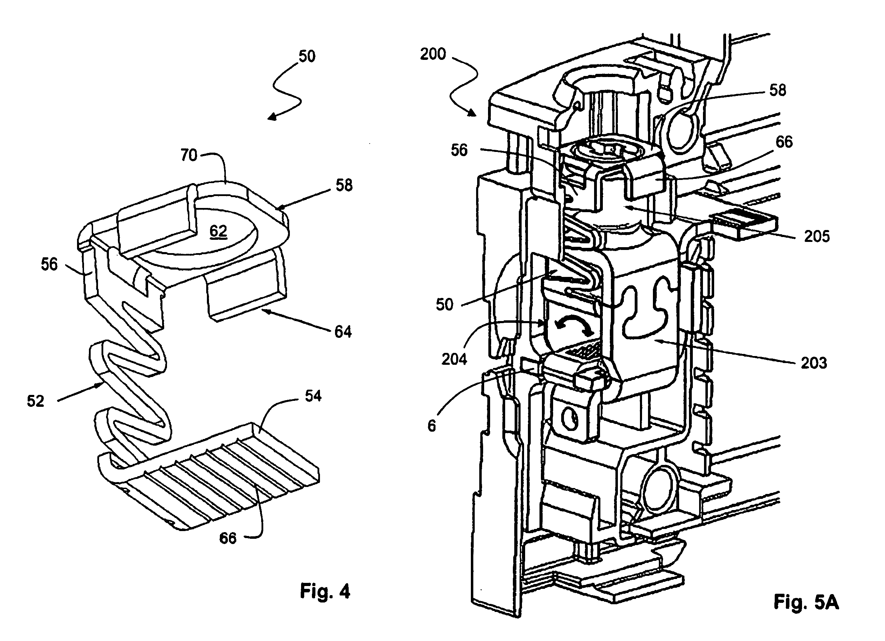

Some casings 2 of existing electrical apparatuses may not be convenient for the insertion and usage of former assembly 10 due e.g. to the absence of a wall in front of the extremity 26 of resilient part 16. It may be suitable to adapt former embodimmt of the invention by providing a terminal assembly 200 made as a single entity with its protection plate 50. Figure 4 describes such a protection plate 50 according to a preferred embodiment of the invention; said protection plate 50 is near to the design of connecting clips 7. Similarly, the protection plate 50 is provided with a resilient part 52 and a base part 54. The extremity 56 of the resilient part 52 opposite the base part 54 is provided with an upper part 58 suitable for cooperation with the fastening means 205 whereas the base part 54 is placed inside the clamp 203 for action on the conductors. The upper part 58 contains a hold portion 60 with a hole 62 for the fastening means 205 which is designed to accommodate a stepped or necked headed screw or a non-headed screw 205. Advantageously, the protection clip 50 is also supported and/or guided by the wall of the casing 2 at fully disengage condition thanks protrusions 64 on the upper part 58 which prevent it from tilting outwards. The base part 54 contains gripping profile 66 in the bottom surface to provide a uniform gripping for tightening of electrical conductors, and it can be associated with means allowing the assembly of an ingress protection component over it, to act as a shutter.

Figure 5A describes the assembly 200 which has the connecting clip 50 in accordance with the present invention, said assembly 200 being placed inside a casing 2 of a circuit-breaker. The upper part 58 of the protection clip 50 is connected to the top end of the screw 205 and the lower part 54 is placed between the cage 203. The clip 50 is in the normal position during the disengaging of the screw 205. During the tightening of the screw 205, it compresses to accommodate the length of the screw 205; a pre-loaded condition can also be planed. The protection clip 50 thus always keeps the screw 205 in the required position during engaging, disengaging and transporting. Due to this resilient feature 52 of the side a reduced stepped height screw 205 can be used which helps in reducing the screw head by 1.0 to 1.5 mm, thus reducing / eliminating the risk of IPxxb finger safe. Moreover, the fastening means 205 compresses the connection uniformly while the screw 205 sits over the top of the lower part 54 positioned in between the clamp 203.

When the different sizes of the connection is placed in the same upper lodging 204a, the bottom portion 54 of the clip 50 get tilts to ensure full tightening of the connection. Upon removal of the screw load or disengaging of the screw 205, the base part 54 regains its original position to get ready for another set of connections. Due to this flexibility, the assembly 200 does not get damage at high application of tightening torque.

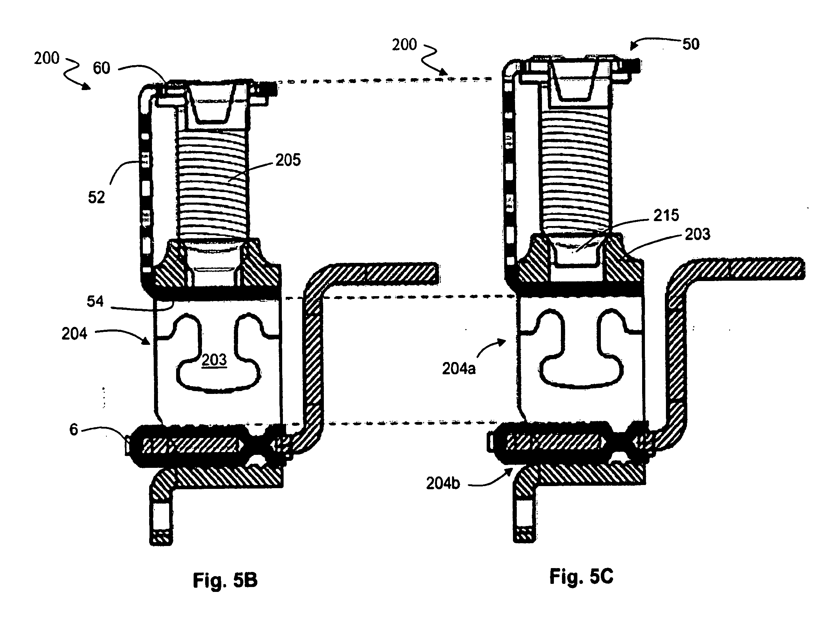

When the screw 205 is at fully disengaged condition, the assembly terminal 200 according to the invention also provides the same maximal upper lodging capacity 204a as of usual connecting clip 6 featured terminal assemblies, but when the screw 205 is initially tightened for one or two rotations, the upper lodging capacity 204a is increased by 1.0 to 1.5 mm approximately thanks the spring back effect of the resilient part 52 of the protection plate 50 during initial tightening. The two positions showing difference in the height between screwed-in and disengaged are shown in Figures 5B and 5C. Since the resilient means 52 provide for change in height, the clip 50 accommodates such change in height.

The foregoing description of the preferred embodiments of the present invention has been presented for purposes of illustration and description. It is not intended to be exhaustive or to limit the invention to the precise form. In particular, some characteristics disclosed in combination may be used individually or replaced by their equivalents and the characteristics of the first embodiment might be used in combination with other characteristics of the second embodiment, and *vice versa*; many modifications or variations will be apparent to practitioners skilled in this art and the scope of the invention is defined by the claims.

## Claims

1. Terminal assembly (100, 200) for multiple connections in an electrical apparatus comprising:
- a clamp (103, 203) defining a passage (104, 204) for receiving and securing multiple electrical conductors and formed with a hole;
- a fastening means (105, 205) cooperating with the clamp (103, 203), comprising a tip (115, 215) at an extremity of a cylindrical part able to penetrate the hole of the clamp (103, 203);
- a protection plate (10, 50) comprising a base part (20, 54) adapted for introduction into the passage (104, 204) of the clamp (103, 203), a resilient portion (12, 52) extending from the base part (20, 54) and sensibly orthogonal thereto, and a cooperating plate (14, 58) with a hole (18, 62) for the fastening means (105, 205), said cooperating plate (14, 58) being sensibly parallel to the base part (20, 54) and coupled to the resilient portion (12, 52);
- wherein, when the terminal (100, 200) is assembled, the cylindrical part of the fastening means (105, 205) passes through both holes (18, 62) of the clamp (103, 203) and the cooperating plate (14, 58), the cylindrical part of the fastening means (105, 205) is sensibly parallel to the resilient portion (12, 52) and the tip (115, 215) of the fastening means (105, 205) is adjacent to the base part (20, 54) which is located inside the passage (104, 204) of the clamp (103, 203), said fastening means (105, 205) being able to move relatively to the resilient portion (12, 52) so that the pressure exerted by the tip (115, 215) on the base part (20, 54) can vary and the passage (104, 204) of the clamp (103, 203) is adjusted to dimensional variations.

2. The assembly according to claim 1 wherein the base part (20, 54) is provided with a gripping profile (24, 66) on the surface opposite the tip (115, 215) of the fastening means (105, 205).

3. The assembly according to claim 1 or claim 2 further comprising a shutter (108) attached to the clamp (103, 203) for ingress protection.

4. The assembly according to one of claims 1 to 3 wherein the resilient portion (12, 52) comprises a zigzagging spring which compression force is parallel to the cylindrical part of the fastening means (105, 205).

5. The assembly according to one of claims 1 to 4 wherein the base part (20) and the cooperating part (14) are located on the same extremity of the resilient portion (12).

6. The assembly according to claim 5 wherein the resilient portion (12) and the cooperating part (14) are made of an electrically non-conductive material, and the base part (20) is made of electrically conductive material.

7. The assembly according to claim 5 or claim 6 wherein the protection plate (10) has a U-shape, with two sensibly identical resilient portions (12) opposite two sides of the cooperating part (14)

8. The terminal assembly according to any of claims 1 to 4 wherein the cooperating part (58) and the base part (54) are coupled to both extremities of the resilient portion (52) so as to form a U.

9. An electrical apparatus comprising a casing (2) equipped with a terminal assembly (100, 200) according to any one of the preceding claims, and a fixed conductor (6) located within the passage (104, 204) of the clamp (103, 203) of the terminal assembly (100, 200).

10. An electrical apparatus comprising a casing (2) equipped with a terminal assembly (100) according to any of claims 5 to 7, wherein the extremity (26) of the resilient part (12) opposite the cooperating part (14) of the protection plate (10) of the terminal assembly (100) is in contact with a fixed part of the casing (2).

11. The apparatus according to claim 10 wherein the resilient portion (12, 52) of the protection plate (10, 50) is positioned inline with the outer surface of the electrical apparatus to provide ingress protection during the movement of the fastening means (105, 205).

## Patentansprüche

1. Anschlussvorrichtung (100, 200) für Mehrfachanschlüssen an einem elektrischen Schaltgerät mit
- einer Klemme (103, 203), in der eine Einführungsöffnung (104, 204) zur Aufnahme und Befestigung mehrerer elektrischer Leiter sowie eine Bohrung ausgebildet ist;
- mit der Klemme (103, 203) zusammenwirkenden Befestigungsmitteln (105, 205) mit einer Spitze (115, 215) an einem Ende eines zylindrischen Teils, der durch die in der Klemme (103, 203) ausgebildete Bohrung hindurchgeführt werden kann;
- einem Schutzelement (10, 50), mit einer Grundplatte (20, 54), die in die Einführungsöffnung (104, 204) der Klemme (103, 203) eingeführt werden kann, einem biegsamen Teil (12, 52), der sich an die Grundplatte (20, 54) anschließt und annähernd senkrecht zu dieser verläuft, einem zugeordneten Trägerplättchen (14, 58) mit einer darin ausgebildeten Bohrung (18, 62) zur Durchführung der Befestigungsmittel (105, 205), welches genannte Trägerplättchen (14, 58) annähernd parallel zur Grundplatte (20, 54) angeordnet und mit dem biegsamen Teil (12, 52) verbunden ist,
- wobei in der Befestigungsstellung der Anschlussvorrichtung (100, 200) der zylindrische Teil der Befestigungsmittel (105, 205) die beiden in der Klemme (103, 203) und im zugeordneten Trägerplättchen (14, 58) ausgebildeten Bohrungen (18, 62) durchragt, der zylindrische Teil der Befestigungsmittel (105, 205) annähernd parallel zum biegsamen Teil (12, 52) verläuft und die Spitze (115, 215) der Befestigungsmittel (105, 205) in der Nähe der in der Einführungsöffnung (104, 204) der Klemme (103, 203) positionierten Grundplatte (20, 54) angeordnet ist, wobei die genannten Befestigungsmittel (105, 205) relativ zum biegsamen Teil (12, 52) bewegbar sind, derart dass ein von der Spitze (115, 215) auf die Grundplatte (20, 54) ausgeübter Druck veränderlich ist und die Einführungsöffnung (104, 204) der Klemme (103, 203) an unterschiedliche Abmessungen angepasst werden kann.

2. Vorrichtung nach Anspruch 1, in deren Grundplatte (20, 54) auf der der Spitze (115, 215) der Befestigungsmittel (105 205) abgewandten Seite eine Grifffläche (24, 66) ausgebildet ist.

3. Vorrichtung nach Anspruch 1 oder 2, die außerdem einen gegen die Klemme (103, 203) geführten Verschluss (108) umfasst, der einen Eindringschutz bildet.

4. Vorrichtung nach einem der Ansprüche 1 bis 3, deren biegsamer Teil (12, 52) ein zickzackförmiges Federelement umfasst, dessen Federkraft parallel zum zylindrischen Teil der Befestigungsmittel (105, 205) wirkt.

5. Vorrichtung nach einem der Ansprüche 1 bis 4, bei der die Grundplatte (20) und das zugeordnete Trägerplättchen (14) auf der gleichen Seite des biegsamen Teils (12) angeordnet sind.

6. Vorrichtung nach Anspruch 5, bei der der biegsame Teil (12) und das zugeordnete Trägerplättchen (14) aus einem elektrisch nicht leitenden Material bestehen und die Grundplatte (20) aus einem elektrisch leitenden Material besteht.

7. Vorrichtung nach Anspruch 5 oder 6, bei der das Schutzelement (10) U-förmig ausgebildet ist und zwei identische biegsame Teile (12) umfasst, die auf zwei einander gegenüber liegenden Seiten des zugeordneten Trägerplättchens (14) ausgebildet sind.

8. Vorrichtung nach einem der Ansprüche 1 bis 4, bei der das zugeordnete Trägerplättchen (58) und die Grundplatte (54) jeweils auf einer Seite des biegsamen Teils (52) angeordnet sind, derart dass ein U-förmiges Element entsteht.

9. Elektrisches Schaltgerät mit einem Gehäuse (2), in das eine Anschlussvorrichtung (100, 200) nach irgendeinem der vorhergehenden Ansprüche eingesetzt ist, sowie mit einem in der Einführungsöffnung (104, 204) der Klemme (103, 203) der Anschlussvorrichtung (100, 200) angeordneten festen Leiter (6).

10. Elektrisches Schaltgerät mit einem Gehäuse (2), in das eine Anschlussvorrichtung (100) nach einem der Ansprüche 5 bis 7 eingesetzt ist, wobei sich das dem zugeordneten Trägerplättchen (14) des Schutzelements (10) der Anschlussvorrichtung (100) abgewandte Ende (26) des biegsamen Teils (12) an einem feststehenden Teil des Gehäuses (2) abstützt.

11. Elektrisches Schaltgerät nach Anspruch 10, bei dem der biegsame Teil (12, 52) des Schutzelements (10, 50) mit der Außenseite des elektrischen Schaltgeräts fluchtet, so dass während der Betätigung der Befestigungsmittel (105, 205) ein Eindringschutz gebildet wird.

## Revendications

1. Bornier (100, 200) pour raccordements multiples au sein d'un appareil électrique comprenant :
- un étrier (103, 203) définissant un passage (104, 204) pour recevoir et solidariser de multiples conducteurs électriques et formé avec un orifice ;
- des moyens de solidarisation (105, 205) coopérant avec l'étrier (103, 203), comprenant une pointe (115, 215) à une extrémité d'une partie cylindrique apte à pénétrer dans l'orifice de l'étrier (103, 203) ;
- une plaque de protection (10, 50) comprenant une embase (20, 54) destinée à l'insertion dans le passage (104, 204) de l'étrier (103, 203), une portion élastique (12, 52) s'étendant depuis l'embase (20, 54) et de manière sensiblement orthogonale à celle-ci, et une plaque de coopération (14, 58) avec un orifice (18, 62) pour le passage des moyens de solidarisation (105, 205), ladite plaque de coopération (14, 58) s'étendant sensiblement parallèlement à l'embase (20, 54) en étant accouplée à la portion élastique (12, 52) ;
- dans lequel, lorsque le bordier (100, 200) est monté, la partie cylindrique des moyens de solidarisation (105, 205) passe à travers les deux orifices (18, 62) de l'étrier (103, 203) et de la plaque de coopération (14, 58), la partie cylindrique des moyens de solidarisation (105, 205) est sensiblement parallèle à la portion élastique (12, 52) et la pointe (115, 215) des moyens de solidarisation (105, 205) est adjacente à l'embase (20, 54) qui est située à l'intérieur du passage (104, 204) de l'étrier (103, 203), lesdits moyens de solidarisation (105, 205) étant aptes à se déplacer de manière relative à la portion résistante (12, 52) de manière à permettre une variation de la pression exercée par la pointe (115, 215) sur l'embase (20, 54) ainsi qu'un ajustement du passage (104, 204) de l'étrier (103, 203) aux variations dimensionnelles.

2. Bornier selon la revendication 1 dans lequel l'embase (20, 54) est munie d'un profil de préhension (24, 66) sur la face opposée à la pointe (115, 215) des moyens de solidarisation (105, 205).

3. Bornier selon la revendication 1 ou la revendication 2 comprenant en outre un volet d'obturation (108) solidaire de l'étrier (103, 203) afin de réaliser une protection contre la pénétration.

4. Bornier selon l'une des revendications 1 à 3 dans lequel la portion élastique (12, 52) comprend un ressort en quinconce dont la force de compression est parallèle à la partie cylindrique des moyens de solidarisation (105, 205).

5. Bornier selon l'une des revendications 1 à 4 dans lequel l'embase (20) et l'élément de coopération (14) sont situés à une même extrémité de la portion résistante (12).

6. Bornier selon la revendication 5 dans lequel la portion élastique (12) et l'élément de coopération (14) sont en un matériau électriquement non-conducteur, et l'embase (20) est en un matériau électriquement conducteur.

7. Bornier selon la revendication 5 ou la revendication 6 dans lequel la plaque de protection (10) a la forme d'un U, avec deux portions élastiques (12) sensiblement identiques en regard de deux faces de l'élément de coopération (14).

8. Bornier selon l'une des revendications 1 à 4 dans lequel l'élément de coopération (58) et l'embase (54) sont accouplés aux deux extrémités de la portion élastique (52) de manière à former un U.

9. Appareil électrique comprenant un boîtier (2) équipé d'un bornier (100, 200) selon une quelconque des revendications précédentes, ainsi que d'un conducteur fixe (6) situé à l'intérieur du passage (104, 204) de l'étrier (103, 203) du bornier (100, 200).

10. Appareil électrique comprenant un boîtier (2) équipé d'un bornier (100, 200) selon une quelconque des revendications 5 à 7, dans lequel l'extrémité (26) de la partie élastique (12) en regard de l'élément de coopération (14) de la plaque de protection (10) du bornier (100) est en contact avec une partie fixe du boîtier (2).

11. Appareil électrique selon la revendication 10 dans lequel la partie élastique (12, 52) de la plaque de protection (10, 50) est positionnée de manière à être alignée avec la face extérieure de l'appareil électrique afin de réaliser une protection contre la pénétration lors du déplacement des moyens de solidarisation (105, 205).
